# EUROPEAN PATENT SPECIFICATION

(11) **EP 1 417 801 B1**
(45) Date of publication and mention of the grant of the patent: **02.07.2008**
(21) Application number: 02755564.8
(22) Date of filing: 12.08.2002
(51) Int. Cl.: H04L 9/08

(54) **SECURITY IN COMMUNICATIONS NETWORKS**
SICHERHEIT BEI KOMMUNIKATIONSNETZWERKEN
SECURITE DANS DES RESEAUX DE COMMUNICATION

(30) Priority: 17.08.2001 GB 0120133
(43) Date of publication of application: 12.05.2004
(73) Proprietor: Nokia Corporation, 02150 Espoo (FI)
(72) Inventor: EDNEY, Jonathan, Willingham, Cambridgeshire CB4 5ES (GB); BLACK, Simon, Stretham, Cambridgeshire CB6 3IG (GB)
(74) Representative: Ruuskanen, Juha-Pekka
(86) International application number: PCT/IB2002/003429
(87) International publication number: WO 2003/017568

(56) References cited:
- EP-A2- 1 098 471
- WO-A2-02/33884
- US-A- 5 889 861
- US-A- 5 963 646
- US-A- 6 088 799

## Description

The invention relates to the field of communications networks and aims to increase secure data communications between a client device connected to the network via a network device. In particular, but not exclusively, the invention is applicable to a Wireless Local Area Network (WLAN) which provides wireless data communications between a remote client device and an access point device, and such a situation will be used as an example throughout the specification.

Wireless transmissions are liable to interception and thus WLANs utilise security in the form of encryption. However, encryption methods are subject to "attack" by hackers who monitor transmissions and attempt to break the encryption code. Most of these types of attack rely on capturing large numbers of encrypted messages or massive offline computations to obtain the secret key used for encryption. A simple and effective means of protection against such attacks is to change the secret key frequently so that attackers do not have enough time, or enough messages, to break the code. For example, changing the secret key every five minutes would provide good protection in most networks.

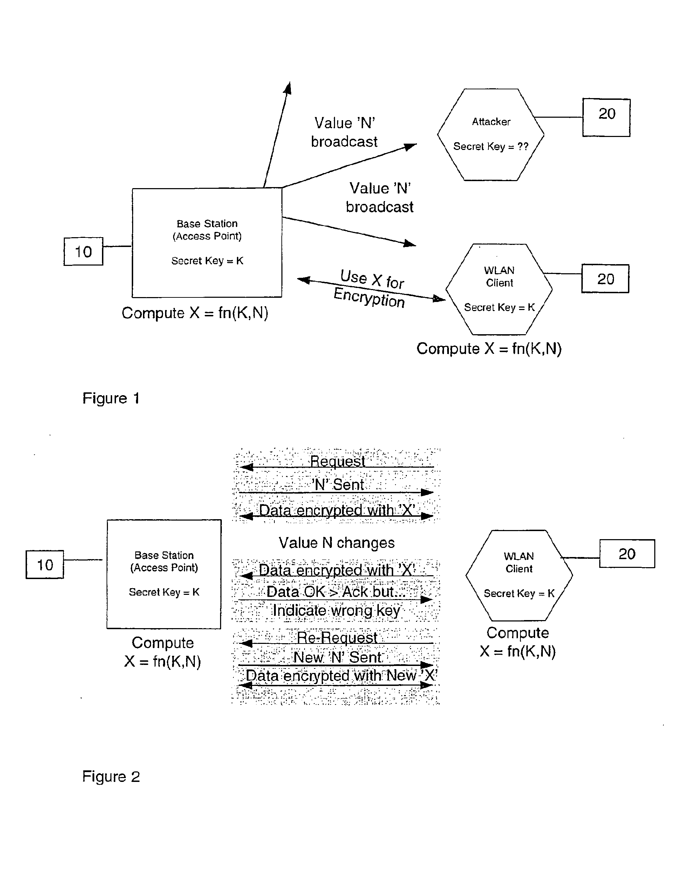

Another proposed solution in the public domain is summarised here as background information, with reference to Figure 1 which is a schematic illustration of the proposed prior art solution. This is the encryption method proposed to be used for IEEE802.1 (WEP).

At a regular interval, such as ten times a second, a 128 bit number (N) is broadcast to all wireless LAN clients (including hackers). The 128 bit number (N) is combined with a secret key (K) known only to the authorised clients and the access point device. This results in the combination called X and the value of X is used as the encryption key for subsequent transmitted data (Figure 1). Since hackers do not know the value K they cannot compute X and although they can now attempt to discover X, discovery of X does not enable K to be derived due to the complexity of the algorithm combining N and K. This is because, although it is difficult to discover X due to the complexity of the encryption algorithm, it is an important property of the algorithm combining N and K that even if X is discovered by breaking the code, K cannot be extracted from X. Furthermore, as N (and hence X) is changed periodically (say five minute intervals), hackers are not given an opportunity to monitor a sufficient transmission sample in order to be able to break the encryption algorithm. Thus, the secret key K remains secure even if hackers crack the value of X. Nevertheless, severe weaknesses in the encryption method used for IEEE802.11 (WEP) have been discovered and published. There is therefore an imperative to implement rapid secret key updates.

EP1098471 discloses a cryptographic device and method of operation for encrypting messages. An encryption key is formed with a first function to generate a temporary key as a function of a random number. A message is encrypted with the temporary key to generate a modified message. The modified message is transformed with a second function to generate an encryption. The encryption generated is identical to a direct encryption of the message with the untransformed key. The temporary key is changed frequently to protect against side channel attacks.

Accordingly, in a first aspect the present invention provides a method of providing secure data communication between a client device and a network device, wherein the method comprises arranging a periodically varying broadcast code (N) to be transmitted such that the network and client devices have knowledge of the broadcast code (N),
providing the network and client devices each with the same secret key code (K) and encryption/decryption algorithm, wherein the algorithm is arranged to encrypt and decipher an encrypted transmission data code used for network authentic data transmissions between the client and network devices, and wherein the encrypted data code is generated from a combination of the data and a secret key (X) which is itself derived from a combination of the secret key code (K) and broadcast code (N),
characterised wherein the broadcast code (N) is transmitted on request by a network/client device.

Although the broadcast code (N) is still transmitted periodically, it is now not transmitted continuously at regular intervals and therefore the method contributes to minimising the transmission of the broadcast code (N). This therefore frees up valuable bandwidth. Accordingly, this invention provides a solution with lower overheads than the current method. This is because overhead, which is the amount of the channel which is used for management related information rather than actual data, is reduced by avoiding the need to send the broadcast code (N) ten times a second. Accordingly, the invention provides a more efficient network which uses less valuable network resources.

A hacker will also find it more difficult to predict when the broadcast code (N) has been changed, as he will not necessarily be able to monitor all changes in broadcast code (N). Therefore the hacker will be less certain of which broadcast code (N) is associated with which particular intercepted encrypted data code transmission, making it increasingly difficult to decipher the transmission. The method also provides continued association of the network and client devices which are still able to communicate using a dynamic encryption data code i.e. one which changes over time due to the changing value of the broadcast code (N). Such a method is also able to handle client/network devices of varying speed, some of which may not necessarily have sufficient speed to efficiently deal with rapid changes in broadcast code (N).

Furthermore, if the method is arranged to identify the particular network/client device by the fact that it is requesting the broadcast code (N), it is possible to provide the broadcast code (N) to the particular device requesting the broadcast code (N). It is further possible to arrange this method to preferably deliver a different value of broadcast code (N) to each network/client device and/or to change the value of broadcast code (N) at different times for each client device. Such methods of operation are not possible with the prior art arrangement as the prior art methods are not arranged to request the broadcast code (N) and thereby cannot identify the device by the fact that it is requesting the broadcast code (N).

As part of the existing IEEE802.11 standard, a wireless client device is connected to an access point device by sending an "associate request" message, and the access point device replies with an "associate response" if it accepts the client device. "Re-associate request" is a variant whereby a client device, which was previously connected to one access point device, can migrate and be connected to a new access point device. According to one embodiment of this invention, the request for the broadcast code (N) and/or the value of the broadcast code (N) is preferably transmitted as part of an "associate" and/or "re-associate" message exchange. For example, the request for the broadcast code (N) may be sent as part of the "associate request", and the value of the broadcast code (N) could be returned as part of the "associate response".

With the use of associate messaging, it is possible to advantageously transmit the broadcast code (N) to the specific device which requested the code. With the use of associate/re-associate messaging in this manner, the present invention can also be conveniently modified to preferably deliver a different value of broadcast code (N) to each network/client device and/or also to change the value of N at different times for each network/client device.

It would be advantageous to use the ACK frame of a data transmission between client/network devices to send notifications of the fact that the broadcast code (N) has changed. The ACK frame is currently used to acknowledge receipt of a transmission and therefore the invention would provide supplementary use for the ACK frame. Furthermore, the method can advantageously be implemented using existing hardware by incorporating a software change to the network/client device. In the case of the IEEE802.11 standard for example, the ACK frame has spare capacity which can conveniently be used by the present invention.

With the use of the ACK frame in this manner, the present invention can be conveniently modified to preferably provide a notification for each different value of broadcast code (N) to each network/client device and/or also for each change of the value of broadcast code (N) with time for each network/client device.

Although the ACK frame, or more specifically the WEP bit of an ACK frame, could be used to send a request to transmit the broadcast code (N), it would be convenient to use the above mentioned associate/re-associate message exchange.

In a preferred embodiment, the method provides a transition phase where it is checked whether the encrypted data code was generated using a secret key (X) derived from a current or recent broadcast code (N), and in the case of the secret key (X) being generated using a recent broadcast code (N), the appropriate client/network device is notified it is not using the current broadcast code (N) such that the appropriate client/network device subsequently requests the current broadcast code (N).

This method has the advantage that it is possible to keep track of which network/client devices have updated their encryption keys.

To send the notification that the current broadcast code (N) is not being used, it would be convenient to again use a bit in the ACK frame of a data transmission, but in this case, the ACK frame would be one which is sent in response to a received data transmission generated using the recent (i.e. the non-current) broadcast code (N). In a IEEE802.11 standard communications network, it would be particularly advantageous to use the "WEP" bit which is not used by the ACK frame in current systems.

Preferably, this invention proposes that the network/client device would re-associate to the same device in order to get the new value of broadcast code (N) after being notified of a change in broadcast code (N).

According to another arrangement there is provided a method of providing secure data communication between a client device and a network device, wherein the method comprises arranging a periodically varying broadcast code (N) to be transmitted such that the network and client devices have knowledge of the broadcast code (N),
providing the network and client devices each with the same secret key code (K) and encryption/decryption algorithm, wherein the algorithm is arranged to encrypt and decipher a encrypted transmission data code used for network authentic data transmissions between the client and network devices, and wherein the encrypted data code is generated from a combination of the data and a secret key (X) which is itself derived from a combination of the secret key code (K) and broadcast code (N),
characterised wherein the ACK frame of a data transmission between client/network devices is used to send notifications of the fact that the broadcast code (N) has changed.

The ACK frame is currently used to acknowledge receipt of a transmission and therefore this aspect of the invention would provide supplementary use for the ACK frame. Furthermore, the method can advantageously be implemented using existing hardware by incorporating a software change to the network/client device. In the case of the IEEE802.11 standard for example, the ACK frame has spare capacity which can conveniently be used by the present invention.

The broadcast code (N) is transmitted on request by a network/client device. Preferably, the request for the broadcast code (N) is transmitted as part of an "associate" and/or "re-associate" message exchange. Specifically, the request for the broadcast code (N) may be transmitted as part of the "associate request".

Preferably, the value of the broadcast code (N) is transmitted as part of an "associate" and/or "re-associate" message exchange. Specifically, the value of the broadcast code (N) is returned as part of the "associate response".

Similarly to the modified method according to the first aspect of the invention, the method according to the second aspect of the invention may be arranged to deliver a different value of broadcast code (N) to each network/client device. Furthermore, the method may be arranged to change the value of the broadcast code (N) at different times for each network/client device.

To make it more difficult to predict when the broadcast code (N) has been changed, the methods may preferably vary the frequency at which the broadcast code (N) is changed.

The broadcast code (N) may be transmitted on request by a network/client device which is recognised by the network e.g. by analysing the appropriate MAC number or by password authentication. However, the broadcast code (N) is preferably transmitted on request by a network/client device using a network authentic encryption data code (X). These two methods may be used in combination. For example, it may be that on initial sign on of the client and network devices, the client/network device may not have the current broadcast code (N) and therefore may not be using the current encryption data code. In this case, the transmission will not be recognised as a network authentic data code and the broadcast code (N) would be transmitted on request by a network/client device which is recognised by the network. However, the method may be limited to the transmission of the broadcast code (N) only on request by a network/client device using a network authentic encryption data code.

Preferably, the broadcast code (N) itself may be encrypted by a separate or the same encryption algorithm, thereby making it more difficult for a hacker to decipher the encryption data code.

Although the methods may advantageously be applied to wireless communications between a client device and a network device, it may equally be applied to wired communications between client/network devices. However, the invention is thought to have particular advantages if applied to a WLAN network or a Bluetooth^{™} network.

The methods may be modified such that the broadcast code (N) is transmitted by either the network device, or by a device independent of the network device, which in unusual circumstances may be a client device. The method encompasses embodiments wherein either one, or both, of the transmissions from the client/network device are encrypted.

The invention also encompasses network and/or client devices configured to operate in all of the above-mentioned manners.

Specific embodiments of the present invention will now be described by way of example only with reference to the following figures in which :
Figure 1 is a schematic representation of a prior art solution to providing security in a WLAN;
Figure 2 is a schematic representation of data communications according to one embodiment of the present invention.

The proposed invention relates to a refinement to the prior art method described above. The current proposed prior art method is inefficient because the value N is broadcast frequently, wasting valuable bandwidth. One embodiment of the present proposal is that the value of N is only sent when requested by the client.

As part of the existing IEEE802.11 standard, a wireless client device 20 is connected to an access point device 10 by sending an "associate request" message, and the access point device 10 replies with an "associate response" if it accepts the client device 20. "Re-associate request" is a variant whereby a client device 20, which was previously connected to one access point device 10, can migrate and be connected to a new access point device 10. According to this embodiment, the value of broadcast code (N) would be requested and delivered as part of the associate/re-associate message exchange.

A further problem to be solved is how to notify the client device 20 that the value of N has changed and how to maintain communications while the new value of X is computed. The invention proposes that there would be a key transition phase (say one minute) during which time the client device 20 could use either the old or the new value of X for encryption. The key choice (old or new) would be indicated in the frame (using existing key ID bits for IEEE802.11 which have been designed to identify which secret key X was used to encrypt the transmission).

During the transition phase, the access point device 10 will detect if the client device 20 uses the old value of X. It will accept and decrypt the message but will notify the client in the manner described below, and illustrated schematically in Figure 2. Once the client device 20 is notified that it is using an out-of-date key it can initiate an exchange to obtain the new value of X.

Notification of the client device 20 is provided using a bit in the ACK frame which is typically sent in response to data frame. In the case of IEEE802.11, the ACK frame has an existing bit "WEP" which is unused and would be appropriate to this purpose. This has the advantage that the method could be applied for existing systems using only firmware upgrades.

This embodiment is arranged such that the client device 20 would re-associate to the same access point device 10 in order to get the new value of (N) after being notified of a change. However, other embodiments may allow re-association to a different access point device 10.

## Claims

1. A method of providing secure data communication between at least a client device (20) and a network device (10) of a communication system, wherein the method comprises arranging a periodically varying broadcast code (N) to be transmitted such that the network and client devices (10,20) have knowledge of the broadcast code (N),
providing the network and client devices (10,20) each with the same secret key code (K) and encryption/decryption algorithm, wherein the algorithm is arranged to encrypt and decipher an encrypted transmission data code used for network authentic data transmissions between the client and network devices (10,20), and wherein the encrypted data code is generated from a combination of the data and a secret key (X) which is itself derived from a combination of the secret key code (K) and broadcast code (N),
**characterised** wherein the broadcast code (N) is transmitted on request by the network device or a client device (10,20).

2. The method according to claim 1, comprising identifying the particular network or client device (10,20) by the fact that it is requesting the broadcast code (N) and arranging to provide the broadcast code (N) to the particular device requesting the broadcast code (N).

3. The method as claimed in claim 2, comprising arranging to deliver a different value of broadcast code (N) to each network or client device (10,20).

4. The method of claim 2 or claim 3, comprising arranging to deliver a different value of broadcast code (N) to a network or client device (10,20) at different times.

5. The method of any of the preceding claims, wherein the request for the broadcast code (N) is transmitted as part of an "associate" and/or "re-associate" message exchange.

6. The method as claimed in claim 5, wherein the request for the broadcast code (N) is transmitted as part of the "associate request".

7. The method of any of the preceding claims, wherein the value of the broadcast code (N) is transmitted as part of an "associate" and/or "re-associate" message exchange.

8. The method as claimed in claim 7, wherein the value of the broadcast code (N) is returned as part of the "associate response".

9. The method as claimed in any of claims 5 to 8, wherein the method is arranged to deliver a different value of broadcast code (N) to each network or client device (10,20).

10. The method as claimed in any of claims 5 to 9, wherein the method is arranged to change the value of the broadcast code (N) at different times for each network or client device (10,20).

11. The method as claimed in any of the preceding claims,
wherein a notification of the fact that the broadcast code (N) has changed is transmitted by the use of ACK frame.

12. The method as claimed in claim 11, wherein the WEP bit of the ACK frame is used to send the notification.

13. The method as claimed in any of the preceding claims,
wherein the method provides a transition phase where it is checked whether the encrypted data code was generated using a secret key (X) derived from a current or recent broadcast code (N), and in the case of the secret key (X) being generated using a recent broadcast code (N), the appropriate client or network device (10,20) is notified it is not using the current broadcast code (N) such that the appropriate client or network device (10,20) subsequently requests the current broadcast code (N).

14. The method as claimed in claim 13, wherein the ACK frame is used to send the notification that the current broadcast code (N) is not being used.

15. The method as claimed in claim 14, wherein the WEP bit in the ACK frame is used to send the notification.

16. The method as claimed in claims 13-15, wherein the network or client device (10,20) re-associates to the same device in order to get the new value of broadcast code (N) after being notified of a change in broadcast code (N).

17. The method according to any preceding claim, wherein the ACK frame of a data transmission between client or network devices (10,20) is used to send notifications of the fact that the broadcast code (N) has changed.

18. The method as claimed in claim 17, wherein the WEP bit of the ACK frame is used to send the notification.

19. The method as claimed in claim 17 or claim 18, wherein the broadcast code (N) is transmitted on request by a network or client device (10,20).

20. The method as claimed in claims 17-19, wherein the request for the broadcast code (N) is transmitted as part of an "associate" and/or "re-associate" message exchange.

21. The method as claimed in claim 20, wherein the request for the broadcast code (N) is transmitted as part of the "associate request".

22. The method as claimed in claims 17-21, wherein the value of the broadcast code (N) is transmitted as part of an "associate" and/or "re-associate" message exchange.

23. The method as claimed in claim 22, wherein the value of the broadcast code (N) is returned as part of the "associate response".

24. The method as claimed in claims 17-23, wherein the method is arranged to deliver a different value of broadcast code (N) to each network or client device (10,20).

25. The method as claimed in claims 17-24 wherein the method is arranged to change the value of the broadcast code (N) at different times for each network or client device (10,20).

26. The method as claimed in claims 17-25, wherein the method provides a transition phase where it is checked whether the encrypted data code was generated using a secret key (X) derived from a current or recent broadcast code (N), and in the case of the secret key (X) being generated using a recent broadcast code (N), the appropriate client or network device (10,20) is notified it is not using the current broadcast code (N) such that the appropriate client or network device subsequently requests the current broadcast code (N).

27. The method as claimed in any of the preceding claims, wherein the frequency at which the broadcast code (N) is changed is varied.

28. The method as claimed in any of the preceding claims, wherein the broadcast code (N) is transmitted on request by a network or client device (10,20) which is recognised by the network.

29. The method as claimed in any of the preceding claims, wherein the broadcast code (N) is transmitted on request by a network or client device (10,20) using a network authentic encryption data code (X).

30. The method as claimed in claim 28 or claim 29, wherein the transmission of the broadcast code (N) is only on request by a network or client device (10,20) using a network authentic encryption data code. '

31. The method as claimed in any of the preceding claims, wherein the broadcast code (N) itself is encrypted by a separate or the same encryption algorithm.

32. The method according to any of the preceding claims applied to wireless communications between a client device and a network device.

33. A communication system comprising a network device and at least a client device arranged to operate according to any of the preceding methods.

34. A client device adapted to provide secure data communication with a network device, the client device being arranged to receive a periodically varying broadcast code (N) and the same secret key code (K) and encryption/decryption algorithm as the network device, wherein the algorithm is arranged to encrypt and decipher an encrypted transmission data code used for network authentic data transmissions between the client and network devices, and wherein the encrypted data code is generated from a combination of the data and a secret key (X) which is itself derived from a combination of the secret key code (K) and the broadcast code (N), **characterised in that** the client device is arranged to request the broadcast code (N).

35. A network device adapted to provide secure data communication with a client device, the network device being arranged to receive a periodically varying broadcast code (N) and the same secret key code (K) and encryption/decryption algorithm as the client device, wherein the algorithm is arranged to encrypt and decipher an encrypted transmission data code used for network authentic data transmissions between the client and network devices, and wherein the encrypted data code is generated from a combination of the data and a secret key (X) which is itself derived from a combination of the secret key code (K) and the broadcast code (N), **characterised in that** the network device is arranged to request the broadcast code (N).

## Patentansprüche

1. Verfahren zum Bereitstellen von sicherer Datenkommunikation zwischen mindestens einer Client-Vorrichtung (20) und einer Netzwerk-Vorrichtung (10) eines Kommunikationssystems, wobei das Verfahren umfasst
- Einrichten eines periodisch variierenden Ausstrahlungscodes (N), der zu übertragen ist, so dass die Netzwerk- und Client-Vorrichtungen (10, 20) Kenntnis von dem Übertragungscode (N) haben;
- den Netzwerk- und Client-Vorrichtungen (10, 20) allen den gleichen geheimen Schlüsselcode (K) und Verschlüsselungs/Entschlüsselungs-Algorithmus bereitstellen, wobei der Algorithmus eingerichtet ist, einen verschlüsselten Übertragungsdatencode zu verschlüsseln und zu dechiffrieren, der für Netzwerk-authentische Datenübertragungen zwischen den Client- und Netzwerk-Vorrichtungen (10, 20) verwendet wird, und wobei der verschlüsselte Datencode aus einer Kombination der Daten und eines geheimen Schlüssels (X) erzeugt wird, der selbst aus einer abgeleitet wird;
**dadurch gekennzeichnet, dass** der Ausstrahlungscode (N) auf Anforderung durch die Netzwerk-Vorrichtung oder eine Client-Vorrichtung (10, 20) übertragen wird.

2. Verfahren nach Anspruch 1, umfassend
- Identifizieren der betreffenden Netzwerk- oder Client-Vorrichtung (10, 20) durch die Tatsache, dass sie den Ausstrahlungscode (N) anfordert; und
- Einrichten, den Ausstrahlungscode (N) der betreffenden Vorrichtung bereitzustellen, die den Ausstrahlungscode (N) anfordert.

3. Verfahren nach Anspruch 2, umfassend
- Einrichten, einen unterschiedlichen Wert des Ausstrahlungscodes (N) an jede Netzwerk- oder Client-Vorrichtung (10, 20) zu liefern.

4. Verfahren nach Anspruch 2 oder 3, umfassend
- Einrichten, einen unterschiedlichen Wert des Ausstrahlungscodes (N) an eine Netzwerk- oder Client-Vorrichtung (10, 20) zu verschiedenen Zeiten zu liefern.

5. Verfahren nach irgendeinem vorhergehenden Anspruch, wobei die Anforderung des Ausstrahlungscodes (N) als Teil eines "Verknüpfen" und/oder "erneut Verknüpfen" Nachrichtenaustauschs übertragen wird.

6. Verfahren nach Anspruch 5, wobei die Anforderung des Ausstrahlungscodes (N) als Teil der "Verknüpfungs-Anforderung" übertragen wird.

7. Verfahren nach irgendeinem der vorhergehenden Ansprüche, wobei der Wert des Ausstrahlungscodes (N) als Teil eines "Verknüpfen" und/oder "erneut Verknüpfen" Nachrichtenaustauschs übertragen wird.

8. Verfahren nach Anspruch 7, wobei der Wert des Ausstrahlungscodes (N) als Teil der "Verknüpfungs-Antwort" zurückgegeben wird.

9. Verfahren nach irgendeinem der Ansprüche 5 bis 8, wobei das Verfahren eingerichtet ist, einen unterschiedlichen Wert des Ausstrahlungscodes (N) an jede Netzwerk- oder Client-Vorrichtung (10, 20) zu liefern.

10. Verfahren nach irgendeinem der Ansprüche 5 bis 9, wobei das Verfahren eingerichtet ist, den Wert des Ausstrahlungscodes (N) zu verschiedenen Zeiten für jede Netzwerk-oder Client-Vorrichtung (10, 20) zu ändern.

11. Verfahren nach irgendeinem der vorhergehenden Ansprüche, wobei eine Benachrichtigung darüber, dass sich der Ausstrahlungscode (N) geändert hat, unter Verwendung von ACK Frame übertragen wird.

12. Verfahren nach Anspruch 11, wobei das WEP-Bit des ACK Frame verwendet wird, um die Benachrichtigung zu senden.

13. Verfahren nach irgendeinem der vorhergehenden Ansprüche, wobei das Verfahren eine Übergangsphase bereitstellt, in der geprüft wird, ob der verschlüsselte Datencode unter Verwendung eines geheimen Schlüssels (X) erzeugt wurde, der aus einem derzeitigen oder kürzlichen Ausstrahlungscode (N) abgeleitet wurde, und im Fall, dass der geheime Schlüssel (X) unter Verwendung eines kürzlichen Ausstrahlungscodes (N) erzeugt wurde, die passende Client- oder Netzwerk-Vorrichtung (10, 20) benachrichtigt wird, dass sie nicht den derzeitigen Ausstrahlungscode (N) verwendet, so dass die passende Client- oder Netzwerk-Vorrichtung (10, 20) nachfolgend den derzeitigen Ausstrahlungscode (N) anfordert.

14. Verfahren nach Anspruch 13, wobei der ACK Frame verwendet wird, um die Benachrichtigung zu senden, dass der derzeitige Ausstrahlungscode (N) nicht verwendet wird.

15. Das Verfahren nach Anspruch 14, wobei das WEP-Bit in dem ACK Frame verwendet wird, um die Benachrichtigung zu senden.

16. Verfahren nach Anspruch 13-15, wobei die Netzwerk- oder Client-Vorrichtung (10, 20) sich mit der gleichen Vorrichtung erneut verknüpft, um den neuen Wert des Ausstrahlungscodes (N) zu erhalten, nachdem sie über eine Änderung im Ausstrahlungscode (N) benachrichtigt wurde.

17. Verfahren nach irgendeinem vorhergehenden Anspruch, wobei der ACK Frame einer Datenübertragung zwischen Client- oder Netzwerk-Vorrichtungen (10, 20) verwendet wird, um Benachrichtigungen darüber zu senden, dass sich der Ausstrahlungscode (N) geändert hat.

18. Verfahren nach Anspruch 17, wobei das WEP-Bit des ACK Frame verwendet wird, um die Benachrichtigung zu senden.

19. Verfahren nach Anspruch 17 oder 18, wobei der Ausstrahlungscode (N) auf Anforderung durch eine Netzwerk- oder Client-Vorrichtung (10, 20) übertragen wird.

20. Verfahren nach Anspruch 17 bis 19, wobei die Anforderung des Ausstrahlungscodes (N) als Teil eines "Verknüpfen" und/oder "erneut Verknüpfen" Nachrichtenaustauschs übertragen wird.

21. Verfahren nach Anspruch 20, wobei die Anforderung des Ausstrahlungscodes (N) als Teil der "Verknüpfungs-Anforderung" übertragen wird.

22. Verfahren nach Anspruch 17 bis 21, wobei der Wert des Ausstrahlungscodes (N) als Teil eines "Verknüpfen" und/oder "erneut Verknüpfen" Nachrichtenaustauschs übertragen wird.

23. Verfahren nach Anspruch 22, wobei der Wert des Ausstrahlungscodes (N) als Teil der "Verknüpfungs-Antwort" zurückgegeben wird.

24. Verfahren nach Anspruch 17 bis 23, wobei das Verfahren eingerichtet ist, einen unterschiedlichen Wert des Ausstrahlungscodes (N) an jede Netzwerk- oder Client-Vorrichtung (10, 20) zu senden.

25. Verfahren nach Anspruch 17 bis 24, wobei das Verfahren eingerichtet ist, den Wert des Ausstrahlungscodes (N) zu verschiedenen Zeiten für jede Netzwerk- oder Client-Vorrichtung (10, 20) zu ändern.

26. Verfahren nach Anspruch 17 bis 25, wobei das Verfahren eine Übergangsphase bereitstellt, in der geprüft wird, ob der verschlüsselte Datencode unter Verwendung eines geheimen Schlüssels (X) erzeugt wurde, der aus einem derzeitigen oder kürzlichen Ausstrahlungscode (N) abgeleitet wurde, und im Fall, dass der geheime Schlüssel (X) unter Verwendung eines kürzlichen Ausstrahlungscodes (N) erzeugt wurde, die passende Client- oder Netzwerk-Vorrichtung (10, 20) benachrichtigt wird, dass sie nicht den derzeitigen Ausstrahlungscode (N) verwendet, so dass die passende Client- oder Netzwerk-Vorrichtung (10, 20) nachfolgend den derzeitigen Ausstrahlungscode (N) anfordert.

27. Verfahren nach irgendeinem der vorhergehenden Ansprüche, wobei die Häufigkeit variiert wird, mit der der Ausstrahlungscode (N) geändert wird.

28. Verfahren nach irgendeinem der vorhergehenden Ansprüche, wobei der Ausstrahlungscode (N) auf Anforderung durch eine Netzwerk- oder Client-Vorrichtung (10, 20) übertragen wird, die von dem Netzwerk erkannt wird.

29. Verfahren nach irgendeinem der vorhergehenden Ansprüche, wobei der Ausstrahlungscode (N) auf Anforderung durch eine Netzwerk- oder Client-Vorrichtung (10, 20) übertragen wird, die einen Netzwerk-authentischen Verschlüsselungsdatencode (X) verwendet.

30. Verfahren nach Anspruch 28 oder Anspruch 29, wobei die Übertragung des Ausstrahlungscodes (N) nur auf Anforderung durch eine Netzwerk- oder Client-Vorrichtung (10, 20) erfolgt, die einen Netzwerk-authentischen Verschlüsselungsdatencode verwendet.

31. Verfahren nach irgendeinem der vorhergehenden Ansprüche, wobei der Ausstrahlungscode (N) selbst durch einen separaten oder den gleichen Verschlüsselungsalgorithmus verschlüsselt wird.

32. Verfahren nach irgendeinem der vorhergehenden Ansprüche, angewendet auf drahtlose Kommunikationen zwischen einer Client-Vorrichtung und einer Netzwerk-Vorrichtung.

33. Kommunikationssystem, umfassend eine Netzwerk-Vorrichtung und mindestens eine Client-Vorrichtung, das eingerichtet ist, gemäß irgendeinem der vorhergehenden Verfahren zu arbeiten.

34. Client-Vorrichtung, die eingerichtet ist, sichere Datenkommunikation mit einer Netzwerk-Vorrichtung bereitzustellen, wobei die Client-Vorrichtung eingerichtet ist, einen periodisch variierenden Ausstrahlungscode (N) und den gleichen geheimen Schlüsselcode (K) und Verschlüsselungs-/Entschlüsselungs-Algorithmus wie die Netzwerk-Vorrichtung zu empfangen, wobei der Algorithmus eingerichtet ist, einen verschlüsselten Übertragungsdatencode zu verschlüsseln und zu dechiffrieren, der für Netzwerk-authentische Datenübertragungen zwischen der Client- und der Netzwerk-Vorrichtung verwendet wird, und wobei der verschlüsselte Datencode aus einer Kombination der Daten und eines geheimen Schlüssels (X) erzeugt ist, der selbst aus einer Kombination des geheimen Schlüsselcodes (K) und des Ausstrahlungscodes (N) abgeleitet ist;
**dadurch gekennzeichnet, dass** die Client-Vorrichtung eingerichtet ist, den Ausstrahlungscode (N) anzufordern.

35. Netzwerk-Vorrichtung, die eingerichtet ist, sichere Datenkommunikation mit einer Client-Vorrichtung bereitzustellen, wobei die Netzwerk-Vorrichtung eingerichtet ist, einen periodisch variierenden Ausstrahlungscode (N) und den gleichen geheimen Schlüsselcode (K) und Verschlüsselungs-/Entschlüsselungs-Algorithmus wie die Client-Vorrichtung zu empfangen, wobei der Algorithmus eingerichtet ist, einen verschlüsselten Übertragungsdatencode zu verschlüsseln und zu dechiffrieren, der für Netzwerk-authentische Datenübertragungen zwischen der Client- und der Netzwerk-Vorrichtung verwendet wird, und wobei der verschlüsselte Datencode aus einer Kombination der Daten und eines geheimen Schlüssels (X) erzeugt ist, der selbst aus einer Kombination des geheimen Schlüsselcodes (K) und des Ausstrahlungscodes (N) abgeleitet ist;
**dadurch gekennzeichnet, dass** die Netzwerk-Vorrichtung eingerichtet ist, den Ausstrahlungscode (N) anzufordern.

## Revendications

1. Procédé de fourniture d'une communication de données sécurisée entre au moins un dispositif client (20) et un dispositif réseau (10) d'un système de communication, dans lequel le procédé comprend la disposition d'un code de diffusion variant périodiquement (N) pour être transmis de sorte que les dispositifs réseau et client (10, 20) aient connaissance du code de diffusion (N),
la fourniture à chacun des dispositifs réseau et client (10, 20) du même code à clé secrète (K) et du même algorithme de chiffrement/déchiffrement, dans lequel l'algorithme est agencé pour chiffrer et déchiffrer un code de données de transmission chiffré utilisé pour des transmissions de données authentiques en réseau entre les dispositifs client et réseau (10, 20), et dans lequel le code de données chiffré est généré à partir d'une combinaison des données et d'une clé secrète (X) qui est elle-même dérivée d'une combinaison du code à clé secrète (K) et du code de diffusion (N),
**caractérisé en ce que** le code de diffusion (N) est transmis sur demande par le dispositif réseau ou un dispositif client (10, 20).

2. Procédé selon la revendication 1, comprenant l'identification du dispositif réseau ou client particulier (10, 20) par le fait qu'il demande le code de diffusion (N) et le fait de s'arranger pour fournir le code de diffusion (N) au dispositif particulier demandant le code de diffusion (N).

3. Procédé selon la revendication 2, comprenant le fait de s'arranger pour remettre une valeur différente de code de diffusion (N) à chaque dispositif réseau ou client (10, 20).

4. Procédé selon la revendication 2 ou la revendication 3, comprenant le fait de s'arranger pour remettre une valeur différente de code de diffusion (N) à un dispositif réseau ou client (10, 20) à des temps différents.

5. Procédé selon l'une quelconque des revendications précédentes, dans lequel la demande du code de diffusion (N) est transmise comme partie d'un échange de messages « d'association » et/ou de « ré-association ».

6. Procédé selon la revendication 5, dans lequel la demande du code de diffusion (N) est transmise comme partie de la « demande d'association ».

7. Procédé selon l'une quelconque des revendications précédentes, dans lequel la valeur du code de diffusion (N) est transmise comme partie d'un échange de messages « d'association » et/ou de « ré-association ».

8. Procédé selon la revendication 7, dans lequel la valeur du code de diffusion (N) est retournée comme partie de la « réponse d'association ».

9. Procédé selon l'une quelconque des revendications 5 à 8, dans lequel le procédé est agencé pour remettre une valeur différente de code de diffusion (N) à chaque dispositif réseau ou client (10, 20).

10. Procédé selon l'une quelconque des revendications 5 à 9, dans lequel le procédé est agencé pour changer la valeur du code de diffusion (N) à des temps différents pour chaque dispositif réseau ou client (10, 20).

11. Procédé selon l'une quelconque des revendications précédentes, dans lequel une notification du fait que le code de diffusion (N) a changé est transmise en utilisant une trame ACK.

12. Procédé selon la revendication 11, dans lequel le bit WEP de la trame ACK est utilisé pour envoyer la notification.

13. Procédé selon l'une quelconque des revendications précédentes, dans lequel le procédé fournit une phase de transition où il est vérifié si le code de données chiffré a été généré en utilisant une clé secrète (X) dérivée d'un code de diffusion actuel ou récent (N), et dans le cas où la clé secrète (X) a été générée en utilisant un code de diffusion récent (N), le dispositif client ou réseau approprié (10, 20) est notifié qu'il n'utilise pas le code de diffusion actuel (N) de sorte que le dispositif client ou réseau approprié (10, 20) demande par la suite le code de diffusion actuel (N).

14. Procédé selon la revendication 13, dans lequel la trame ACK est utilisée pour envoyer la notification selon laquelle le code de diffusion actuel (N) n'est pas utilisé.

15. Procédé selon la revendication 14, dans lequel le bit WEP dans la trame ACK est utilisé pour envoyer la notification.

16. Procédé selon l'une des revendications 13 à 15, dans lequel le dispositif réseau ou client (10, 20) se ré-associe au même dispositif afin d'obtenir la nouvelle valeur du code de diffusion (N) après avoir été notifié d'un changement du code de diffusion (N).

17. Procédé selon l'une quelconque des revendications précédentes, dans lequel la trame ACK d'une transmission de données entre des dispositifs client ou réseau (10, 20) est utilisée pour envoyer des notifications du fait que le code de diffusion (N) a changé.

18. Procédé selon la revendication 17, lequel le bit WEP dans la trame ACK est utilisé pour envoyer la notification.

19. Procédé selon la revendication 17 ou la revendication 18, dans lequel le code de diffusion (N) est transmis sur demande par un dispositif réseau ou client (10, 20).

20. Procédé selon l'une des revendications 17 à 19, dans lequel la demande du code de diffusion (N) est transmise comme partie d'un échange de messages « d'association » et/ou de « ré-association ».

21. Procédé selon la revendication 20, dans lequel la demande du code de diffusion (N) est transmise comme partie de la « demande d'association ».

22. Procédé selon l'une des revendications 17 à 21, dans lequel la valeur du code de diffusion (N) est transmise comme partie d'un échange de messages « d'association » et/ou de « ré-association ».

23. Procédé selon la revendication 22, dans lequel la valeur du code de diffusion (N) est retournée comme partie de la « réponse d'association ».

24. Procédé selon l'une des revendications 17 à 23, dans lequel le procédé est agencé pour remettre une valeur différente de code de diffusion (N) à chaque dispositif réseau ou client (10, 20).

25. Procédé selon l'une des revendications 17 à 24, dans lequel le procédé est agencé pour changer la valeur du code de diffusion (N) à des temps différents pour chaque dispositif réseau ou client (10, 20).

26. Procédé selon l'une des revendications 17 à 25, dans lequel le procédé fournit une phase de transition où il est vérifié si le code de données chiffré a été généré en utilisant une clé secrète (X) dérivée d'un code de diffusion actuel ou récent (N), et dans le cas où la clé secrète (X) a été générée en utilisant un code de diffusion récent (N), le dispositif client ou réseau approprié (10, 20) est notifié qu'il n'utilise pas le code de diffusion actuel (N) de sorte que le dispositif client ou réseau approprié demande par la suite le code de diffusion actuel (N).

27. Procédé selon l'une quelconque des revendications précédentes, dans lequel la fréquence à laquelle le code de diffusion (N) est changé est variée.

28. Procédé selon l'une quelconque des revendications précédentes, dans lequel le code de diffusion (N) est transmis sur demande par un dispositif réseau ou client (10, 20) qui est reconnu par le réseau.

29. Procédé selon l'une quelconque des revendications précédentes, dans lequel le code de diffusion (N) est transmis sur demande par un dispositif réseau ou client (10, 20) en utilisant un code de données de chiffrement authentique de réseau (X).

30. Procédé selon la revendication 28 ou la revendication 29, dans lequel la transmission du code de diffusion (N) n'est que sur demande par un dispositif réseau ou client (10, 20) en utilisant un code de données de chiffrement authentique de réseau.

31. Procédé selon l'une quelconque des revendications précédentes, dans lequel le code de diffusion (N) lui-même est chiffré par un algorithme de chiffrement distinct ou le même algorithme de chiffrement.

32. Procédé selon l'une quelconque des revendications précédentes appliqué à des communications sans fil entre un dispositif client et un dispositif réseau.

33. Système de communication comprenant un dispositif réseau et au moins un dispositif client agencé pour opérer selon l'un quelconque des procédés précédents.

34. Dispositif client adapté pour fournir une communication de données sécurisée avec un dispositif réseau, le dispositif client étant agencé pour recevoir un code de diffusion variant périodiquement (N) et le même code à clé secrète (K) et le même algorithme de chiffrement/déchiffrement que le dispositif réseau, dans lequel l'algorithme est agencé pour chiffrer et déchiffrer un code de données de transmission chiffré utilisé pour des transmissions de données authentiques en réseau entre les dispositifs client et réseau, et dans lequel le code de données chiffré est généré à partir d'une combinaison des données et d'une clé secrète (X) qui est elle-même dérivée d'une combinaison du code à clé secrète (K) et du code de diffusion (N), **caractérisé en ce que** le dispositif client est agencé pour demander le code de diffusion (N).

35. Dispositif réseau adapté pour fournir une communication de données sécurisée avec un dispositif client, le dispositif réseau étant agencé pour recevoir un code de diffusion variant périodiquement (N) et le même code à clé secrète (K) et le même algorithme de chiffrement/déchiffrement que le dispositif client, dans lequel l'algorithme est agencé pour chiffrer et déchiffrer un code de données de transmission chiffré utilisé pour des transmissions de données authentiques en réseau entre les dispositifs client et réseau, et dans lequel le code de données chiffré est généré à partir d'une combinaison des données et d'une clé secrète (X) qui est elle-même dérivée d'une combinaison du code à clé secrète (K) et du code de diffusion (N), **caractérisé en ce que** le dispositif réseau est agencé pour demander le code de diffusion (N).
